(19) Europäisches Patentamt
European Patent Office
Office européen des brevets

(11) Publication number: **0 195 373**
**A2**

# (12) EUROPEAN PATENT APPLICATION

(21) Application number: 86103420.5

(22) Date of filing: 14.03.86

(51) Int. Cl.$^4$: A 01 G 9/18

(30) Priority: 21.03.85 DK 1286/85

(43) Date of publication of application:
24.09.86 Bulletin 86/39

(84) Designated Contracting States:
AT DE FR GB IT NL SE

(71) Applicant: Dansk Gartneri-Teknik A/S
Egeskovvej 6
DK-2660 Brondby Strand(DK)

(72) Inventor: Jensen, Niels Thorkild
17, Risingevej
DK-2660 Brondby Strand(DK)

(74) Representative: Tetzner, Volkmar, Dr.-Ing. Dr. Jur.
Van-Gogh-Strasse 3
D-8000 München 71(DE)

## (54) A method and an apparatus for climatic regulation in connection with the pollination of hothouse plants.

(57) In order to improve the yield of seeds and fruits from plants in a greenhouse it is suggested that the climatic conditions during the flowering of the plants is controlled in such a manner that the flowers are pollinated effectively. In a greenhouse, where it is possible to measure and regulate the temperature (T) and the atmospheric moisture (LF), it is therefore suggested that the intensity (SL) of the sunlight incident in the greenhouse is measured and integrated to obtain a measure (I) for the accumulated sunlight energy, and that the atmospheric moisture (LF) in the greenhouse is measured and that the atmospheric moisture (LF) by regulation is decreased concurrently with the increasing accumulated sunlight energy (E), until the accumulated sunlight energy exceeds a predetermined threshold value (EA), and until the atmospheric moisture (LF) has been regulated down to or below a second predetermined threshold value (LFB), whereafter the atmospheric moisture is kept at or below this low value for a certain period, during which pollination is effected. After finishing the pollination the atmospheric moisture (LF) should be increased considerably until the moisture content exceeds a predetermined threshold value (LFC) to be maintained for a certain period of time.

A climatic control system for use in the method comprises a temperature sensor (T), a sunlight sensor (SL) and an atmospheric moisture sensor (LF), which via an A/D converter (18) is connected to a microcomputer (19) which on its output is connected by means of relays to the irrigation means (21), heating means (22) and ventilation (23).



Croydon Printing Company Ltd.

Title: A method and an apparatus for climatic regulation in connection with the pollination of hothouse plants.

The invention relates to a method of promoting pollination of flowers on plants in a greenhouse having climatic control, whereby the temperature and the atmospheric moisture are measured and regulated.

It is wellknown to control the climate in a greenhouse by measuring the temperature and the atmospheric moisture in the greenhouse and by measuring the intensity of incident sunlight and controlling the supply of heat and moisture in such a manner that the temperature and the moisture are kept at a suitable level.

Special problems may arise in connection with the pollination of hothouse plants. In nature the pollination is generally in the form of entomophily or anemophily. It cannot be expected that a sufficient number of insects will be present in a greenhouse, and neither can it be expected that the insects, if any, will be able to pollinate the plants in question, which may be special tropical species requiring similar specific insects. It has further turned out that special climatic conditions are required to obtain an effective pollination. It is especially important that the pollen is dry so that it easily disperses during the pollination. Particularly in connection with tomato plants it may be a problem in the early spring and in periods of cloudy weather and rain with a usually high atmospheric moisture to achieve the ideal pollination conditions, and in connection with the previously known air-conditioning plants it is common that a substantial part of the most precocious tomato flowers is not satisfactorily pollinated. An effective pollination is essential to a high yield.

It is consequently the object of the present invention to provide a method and an apparatus for procuring the optimum climatic conditions for pollination of flowering plants in greenhouses.

The method according to the invention is characterised in that the incident light in the greenhouse is sensed by a light sensitive device and integrated thereby currently providing a value for accumulated energy, that is the energy received from a predetermined initial point (preferably in the early morning e.g. sunrise) until the current moment, and in that the atmospheric moisture in the greenhouse is measured regularly and decreased by regulation concurrently with the increasing accumulated light energy, until the accumulated light energy has reached a first predetermined threshold value, and until the atmospheric moisture has been regulated down to or below a second predetermined threshold value, and in that the atmospheric moisture content is kept below said second threshold value for a certain period of time, during which pollination is executed, and in that after finishing the pollination the atmospheric moisture is increased considerably intil the moisture content exceeds a third predetermined threshold value to be maintained for a certain period of time.

As a result an appropriate climate is provided to promote pollination, as the low atmospheric moisture in the beginning of the process will dry the pollen and make it easily movable, so that during the pollination the pollen is easily released and effectively dispersed. The request for having received a certain minimum of (solar) light energy defined by the first predetermined value will ensure that the plant has received enough energy for developping pollen and stigma sufficient for the pollination to be effective. The high atmospheric moisture after pollination ensures that the transferred pollen "germinates" and is united with the ovules of the flowers.

By light intensity or light energy is generally meant a measure for the sunlight incident in the greenhouse, but an artificial illumination by means of lamps transmitting light in the spectrum influencing the plants may also be used. The light of interest is the socalled assimilation light, which in green plants causes the photosynthesis by means of which the plants exploit the $CO_2$-content of the air. It is well-known to calculate the light intensity of solar radiation as sunlight intensity or influx of light, and it is also well-known to integrate the solar radiation to get a measure for the total influx of sunlight during a certain period of time, so that a measure is achieved for the total sunlight energy. In a preferred embodiment of the invention the sunlight intensity is measured by means of a photo cell. The photo cell may be of the type which is sensitive in a wide range of the visible light and preferably comprising infrared as well as ultra-violet light. The use of a photo cell, which is e.g. only sensitive to blue light also falls within the scope of the invention. A quantimeter measuring the induced energy may also be utilized.

The atmospheric moisture can advantageously be regulated within a predetermined moisture interval defined by an upper and a lower threshold value. The upper threshold value is set at a given initial value at dawn and thereafter amended as a diminishing function of the accumulated light energy, and when, or if, the accumulated light energy exceeds the first predetermined threshold value, said upper value is altered to the second predetermined threshold value during a first given period and thereafter increased to a value greater than the third predetermined value. The lower threshold value is from the beginning set at a value somewhat smaller than the initial value and during pollination to a value somewhat smaller than the second predetermined threshold value, and the lower threshold value is then altered to the third predetermined threshold value and kept at this value during the second given period. As a result the atmospheric moisture changes only gradually, and the plants will not be subjected to shocks which could damage their development. Optimum conditions can be ensured by this method during the pollination and immediately after the pollination by means of a suitable adjustment of the various threshold values.

While the moisture is reduced, the upper threshold value is preferably a linearly diminishing function of the accumulated light energy, and preferably with an inclination equal to the initial value minus the second predetermined threshold value divided by the first predetermined threshold value. Thereby a completely even reduction of the atmospheric moisture is thus ensured until the time, at which pollination can be recommended.

After the pollination is finished advantageously the atmospheric moisture may be increased gradually with a given increase per time unit. This is an expedient feature in order to avoid too great climatic fluctuations.

When the moisture period is terminated, the atmospheric moisture should again be decreased to a fourth predetermined threshold value and preferably gradually with a given lowering per time unit. It is essential that the atmospheric moisture is decreased again so that the plants are not subjected to fungus attacks. This decrease may optionally be performed to a value below the normally recommended atmospheric moisture, but in most cases a decrease of the moisture to the moisture normally recommended at daytime will suffice.

The atmospheric moisture is preferably reduced by a limited small increase of the temperature and/or by limited ventilation, especially a gradual opening of the windows of the greenhouse, and preferably in such a manner that these methods are used in turn. Even small changes of the temperature or the ventilation, respectively, will protect the plants against shock.

If the weather conditions are particularly adverse, i.e. no sun, but a high moisture content, it will of course serve no purpose to let the climatic control of the greenhouse continue the reduction of the atmospheric moisture. By the method according to the invention the climatic control of the greenhouse is switched from the special pollination control to a normal control, if pollination has not been started at or before a given preset time. The pollination is thus postponed to the next day. Such a postponement should, however, not take place two days in succession as the flowers would then be too old, and according to the invention a decrease of the atmospheric moisture to the predetermined threshold value is enforced on the second day, when the given time is exceeded.

A pollination can according to the invention advantageously be initiated by activation of an alarm system warning the persons on duty, who are able to perform a manual transfer of pollen by means of a brush or the like, or alternatively by a preferably automatic generation of an air flow capable of transporting pollen.

Such an air flow can advantageously be provided by opening and closing a number of windows in the greenhouse once or several times to a restricted opening height, said opening-closing function being repeated a given number of times at given intervals, and the windows of the greenhouse are preferably of the type automatically controllable by the climate controlling eqipment. A particularly effective transport of pollen is obtained by this method.

The invention further relates to a climatic control system for performing the method. The system with associated means for providing analog or digital signals for light intensity or influx of light, atmospheric moisture and temperature comprises means for receiving and processing signals as well as actuation means associated with means for controlling temperature, moisture and ventilation. The system is characterised in that the signal processing means are adapted to provide a measure for the total accumulated light energy and are adapted to control the atmosperic moisture as a diminishing function of the accumulated light energy, and furthermore it comprises means for comparing the accumulated light energy with a first threshold value and for comparing the atmospheric moisture measured with upper and lower variable and adjustable threshold values, and in that the system comprises means for initiating pollination. As a result the pollination is initiated at the optimum time.

The means for initiating pollination preferably comprise alarm means warning the persons on duty able to perform the pollination or supervise that pollination takes place.

The moistening means are preferably one or several series of spray nozzles, to which water can be supplied under pressure, optionally a mixture of water and air under pressure.

The invention will be described below with reference to the accompanying drawing, in which

Figure 1 is a diagrammatic view of a greenhouse,

Figure 2 illustrates a flow chart of the electric control circuit according to the invention,

Figures 3, 4, 5, 6, and 7 illustrate examples of flow diagrammes of the coded control routines,

Figure 8 illustrates a curve diagramme of the atmospheric moisture as function of the accumulated light energy, and

Figures 9, 10, and 11 are curve diagrammes of the atmospheric moisture as function of the time.
Figure 1 is a diagrammatic illustration of a greenhouse having a glass roof 11 with windows 12, the openings of which are adjustable, preferably by means of a driving motor (not shown). A number of plants are schematically shown at 13. The greenhouse is heatable, e.g. by means of heating pipes 14, of which only two are shown in the drawing. The atmospheric moisture above the plants may be increased by supplying water to a pair of spray-nozzles 16 mounted above the plants.

The greenhouse 10 is provided with a number of sensors T, SL, LF, and optionally K $CO_2$ for measuring temperature, sunlight intensity, atmospheric moisture and optionally the concentration of carbon dioxide, respectively. The sensor sensing the concentration of carbon dioxide is, however, not necessary in connection with the present invention. Many of the various types of sensors in the market may be applied, if only they transmit a suitable analog or digital signal unambiguously dependent on the parameter to be measured.

The greenhouse preferably comprises an air-conditioning plant of the type, in which the heat supply is controlled in such a manner that the temperature in the greenhouse is regulated depending on the intensity of the incident sunlight. The atmospheric moisture may be reduced by ventilation by a stepwise opening of the windows 12 and by heating, and may be increased by supplying a rainy mist through the spray nozzles 16.

Figure 2 illustrates a flow chart of the electronic control forming part of the inventive air-conditioning plant of the greenhouse. The above sensors are again designated T, SL, LF, K $CO_2$. In connection with the control shown it is assumed that the sensors transmit analog signals, but it will of course also be possible and within the scope of the invention to form a similar circuit with sensors directly transmitting digital signals. The analog signals from the sensors are converted in an A/D converter 18 to digital signals and transmitted to a microcomputer 19 of the kind comprising a central signal-processing unit CPU and associated memories such as one or several ROM, PROM or EPROM and RAM. The circuit furthermore comprises one or several clock generators and similar circuits for determining certain time intervals, in the drawing shown as timer 0, timer 1, timer 2 etc. The signals received are processed and compared in the microcomputer, e.g. in the manner described in greater details below in connection with Figures 3-7. The microcomputer transmits control signals either directly to controlled relays or via a D/A converter to a regulator 21 for the water supply through the spray nozzles 16, to a regulator 22 for the heat supply from a central heating or the like and to a regulator 23 for a driving motor capable of opening and closing the windows 12.

Figures 3-7 illustrate examples of flow diagrammes of possible embodiments of the signal processing and evaluation in the microprocessor 19. The microprocessor may be constructed in such a manner that one or several of the timers are reset to zero at daybreak. Threshold values are coded into the memory of the microprocessor, such as the threshold value EA, which the accumulated light energy should exceed before pollination is initiated, upper and lower threshold values of the relative atmospheric moisture, designated LF max a - e, n and LF min a - e in the drawing, a plurality of times t, $t_1$ or periods ta, tb, tc, td etc.. In a preferred embodiment according to the invention the microprocessor currently receives data as to sunlight intensity SLI, atmospheric moisure LF, temperature T, optionally the concentration of carbon dioxide K $CO_2$, and optionally the time t. However, the microcomputer preferably generates the time signal t by itself. The microcomputer may itself be programmed to calculate the accumulated sunlight energy E to the time $t_x$, as $E(t_x) = \int_0^{t_x} SLl(t)dt \sim \sum_{t=0}^{t=n} SL_i \; \Delta t_i$. There are, however, also sensors on the market directly transmitting a signal as to the total amount of sunlight energy, and it will consequently be possible to have an embodiment, in which the integration does not take place in the microprocessor. The light intensity measured is normally the influx of the sunlight. It is, however, within the scope of the invention to use artificial illumination in connection with the method.

In connection with pollination it is especially important before and during the pollination to keep the moisture at a low level so that the pollen is easily released and better dispersed so effectively as possible on a great number of flowers. The atmospheric moisture should preferably for a period be lowered to about 40 - 50% (relative atmospheric moisture).

In the preferred embodiment the moisture control is adapted to keep the atmospheric moisture at a given interval defined by a maximum value LF max and a minimum value LF min. At daybreak, which can be defined either by a given set time $t_0$ or by an increased light intensity, i.e. by the measured sunlight intensity exceeding a specific threshold value, the moisture control switches from "night"-control to "day"-control. The atmospheric moisture should hereafter be between LF max-a and LF min-a, where LF max-a according to the invention is a diminishing function of the accumulated light energy E. For the sake of clarity it should be emphasized that E is set at 0 at daybreak, and the accumulated light energy is thus measured as the energy received on the present day from dawn and until the present moment.

The initial value of LF max-a is measured by means of LF0, and this value can be the nominal moisture in the daytime, LF max-n. The measured atmospheric moisture LF($t_0$) can, however, also be used as LF0 for the time $t_0$, i.e. at daybreak. If LF($t_0$) is high, it is, however, advantageous to set LF0 = LF

max-n or another predetermined smaller value to ensure that the atmospheric moisture is decreased sufficienty quickly to obtain the desired drying of the pollen. In a preferred embodiment the microprocessor is adapted to set LF0 equal to the lowermost of the said two values $LF(t_o)$ and LF max-n.

In order to obtain a smooth decrease of the atmospheric moisture and thereby avoid shock influences on the plants, it is according to the invention suggested that LF max-a is altered as a linearly diminishing function of the continuously increasing light energy E so that LF max-a can be calculated from the following expression:

$$LF\ max\text{-}a = LFX = LF0 \quad E \cdot (LF0 - LFB)/EA,$$

in which LFB is the value, below which the atmospheric moisture should be decreased, and EA is the threshold value, which the accumulated light energy is to exceed.

As a result the atmospheric moisture decreases gradually to the desired LFB, and simultaneously the accumulated sunlight energy exceeds the desired threshold value EA. The values LFB and EA can in advance be encoded into the memory of the apparatus by the user. Such values can advantageously be amended according to the wishes of the user, e.g. in consideration of the time of the year or the species.

When the desired light energy EA and the low atmospheric moisture LFB corresponding thereto have been reached, pollination can be initiated. This can be done either automatically or manually and will be described in greater details below.

The low atmospheric moisture LFB may advantageously be maintained for a given period of time tb' before a control signal "ready for pollination" is transmitted.

By the suggested method it is obtained that pollination is initiated as early in the day as possible, and the results of the pollination are thus improved. Simultaneously it is obtained that pollination is not initiated until the optimum conditions are present, namely when the pollen is well-developed or "ripe" and dry and thus easily movable. It is essential that the pollination is initiated as early in the day as possible so that the dust has time to unite with the ovules.

During the pollination and for a suitably long period tb the very low atmosperic moisture is maintained by setting LF max equal to LFB and LF min equal to LF min-b, which should be somewhat smaller than LFB. The microprocessor should preferably be constructed to calculate LF min-b as LFB-$\delta$ itself, where $\delta$ is put at e.g. 2%. If LF min-b is put at a too low value the result could be a disatrous drying out of the plants. This should of course be avoided.

When the pollination is ended and/or when the time tb has expired the moisture should be reincreased. The system can advantageously be provided with a manually operated switch which is activated when a manual pollination is ended. If the pollination is automatic, the time tb will decide when the pollination is considered finished. The time tb may e.g. be 1/2 or 1 hour. The moisture is increased by the microprocessor transmitting control pulses to a relay controlling a solonoid valve capable of supplying a series of spray nozzles with water. As shown in Figure 10 LF max is amended to 100%, and LF min to LFC of e.g. 90%. The high moisture percentage is maintained for a predetermined period tc. As a result the pollen which during pollination has landed on a stigma will reach the ovulus.

In a preferred embodiment the moisture is slowly changed with a given increase and/or decrease per time unit as indicated in Figure 11.

After the very high atmospheric moisture percentage during the period tc the moisture content should again be decreased to avoid fungus attacks and similar diseases, the spreading of which is promoted by a high moisture. The atmospheric moisture is preferably decreased directly to a normal atmospheric moisture by amending LF max to LF max-n and LF min to LF min-n. Alternatively LF can be lowered extraordinarily to provoke a certain drying out by reducing LF max to LF max-D and LF min to LF min-D as shown in Figure 11. After a certain period of time td the limits will be amended to the normal limits which will then be maintained for the rest of the day.

As mentioned above this moisture regulation will yield the earliest possible and simultaneously the optimum time of pollination $t_1$.

By the suggested method the time of initiation of the pollination will thus depend on when the accumulated sunlight energy reaches the predetermined threshold value EA. On a day with clear sunshine from early morning the pollination can take place early in the day, and oppositely in connection with cloudy weather from early morning the pollination cannot take place until later in the day.

As it is not desired to defer the pollination till late in the afternoon with the risk of never reaching the optimum time, the system may be constructed to enforce the necessary drying out at a predetermined maximum time $t_a$. If the desired sunlight energy has not yet been reached at that time it can be chosen either to defer the pollination till the next day or enforce a reduction of the atmospheric moisture and then perform the pollination. In a preferred embodiment according to the invention in case of adverse weather conditions the pollination is deferred for one day provided it was not deferred the day before. If the pollination was deferred the day before, the pollination program will be carried through on the particular day by decreasing LF max after the time $t_a$ to LFB whereafter the moistening will be actuated. When the atmospheric moisture content has decreased below the given threshold value LFB the pollination is effectuated, too. An example of this sequence is shown in Figure 10, where the object is that it should appear from the time axis t that pollination takes place at a later time than in the example in Figure 9.

In the flow diagram in Figure 3 the boxes 54, 55 illustrate this function.

During the regulation the atmospheric moisture measured is currently compared with the calculated upper threshold value of the atmospheric moisture LF max in the rhomb 56, and should the atmospheric moisture be too high, a moistening of the greenhouse is initiated as shown in Fig. 4, for I = 1, by raising the temperature, a signal being transmitted from the microcomputer to the heat control which will then raise the temperature in the greenhouse. Thereafter, optionally after a certain given delay of time, the new measuring data of the atmospheric moisture are compared with the functional value LFX, and if the atmospheric moisture is still too high, moistening method No. 2 , P(2), is used, namely a slight opening of the windows. As a result the microprocessor transmits a signal to a driving motor capable of opening the windows to a limited extent. If after a certain period of time this has not given the desired result, namely a suitably low atmospheric moisture given by the functional value LFX, moistening method No. 3 is used, P(3), namely a slightly wider opening of the windows. This is also done by the microprocessor transmitting an activation signal to the driving motor regulating the windows. Should this still not be sufficient it will in the preferred embodiment be attempted to raise the temperature further. It is obvious that the indicated methods of moistening may be varied in may ways.

As the temperature T is preferably also regulated concurrently with the increasing amount of light, LFX can alternatively be defined as a function of the greenhouse temperature T.

If the accumulated sunlight energy E has still not reached the critical value EA, cf. the box 54, the moisture regulation continues, as the programme returns to the box 53 and sets a new value for LFX. In an alternative embodiment of the programme according to the invention the LFX value is amended currently during the moistening routine of Fig. 4.

If the atmospheric moisture LF gets below the lower threshold value LF min, moistening is initiated.

When the critical value EA of the sunlight energy has been exceeded, the progamme checks at 58 whether the measured value of the atmospheric moisture is sufficiently low, i.e. smaller than or equal to the critical value of the atmospheric moisture LFB. If the atmospheric moisture is too high, the moistening continues as shown in Fig. 4

When the programme reaches the step denoted by the box 61, the desired climatic conditions are present and pollination can take place. The apparatus is preferably connected with an alarm device 63 advising the gardener by sound and/or light that it is time for pollination. This may be done manually by the gardener touching stamen and stigma, respectively, with a brush. The apparatus is preferably constructed in such a manner that the microprocessor transmits a signal to the driving motor of the windows to open the windows to a certain restricted opening position, whereafter they are closed again. This opening and closing procedure can advantageously be regularly repeated a specific number of times, e.g. 2-5 times. The opening of the windows provokes an air flow transporting the pollen around in the greenhouse to an extent sufficient for obtaining an effective pollination. During the actual pollination the water supply to the spray nozzles 16 should be interrupted completely, and the low atmospheric moisture LFA should be maintained as shown at the box 65.

Pollination can be ended after a suitable period, e.g. half an hour to one hour, determined by the timer 2 and designated $t_b$ in the box 66. A moistening is thereafter initiated (cf. Figure 5), the microprocessor transmitting a signal for regulating the water supply to the spray nozzles. After supply of a certain amount of water through the spray nozzles the latest registered data of the atmospheric moisture LF are compared with a new minimum value LFC corresponding to a high atmospheric moisture of e.g. 90%, and if the desired atmospheric moisture has not been obtained, the moistening is repeated the necessary number of times. Only a limited (relatively small) amount of water is supplied each time so that the atmospheric moisture is increased suitably slowly to prevent the plants from being subjected to shock. The atmospheric moisture is preferably increased with a gradual increase of the minimum value LF min from LFA to LFC as a linear function of the time during a suitable, adjustable period of time or with a suitable increase per time unit as indicated by the phantom lines in Figure 11. The high atmospheric moisture is maintained for a certain period, which may e.g. be measured by means of a timer 3, cf. Figure 5. Alternatively the high atmospheric moisture is maintained until about one or two hours before sundown, e.g. by comparing the sunlight intensity with a given threshold value. Thereafter a normal regulation of the atmospheric moisture is applied, i.e. an atmospheric moisture of about 50 - 60%. Figures 8-11 illustrate diagrammes of typical intended regulation values of the relative atmospheric moisture in connection with the method according to the invention.

Figure 9 further illustrates an example of a curve of the accumulated light energy as a function of the time. In periods with a cloudy sky, E is almost constant and consequently also LFX. The flow diagrammes shown may be varied in many ways, the climate control may e.g. be constructed in such a manner that the pollination is repeated once or several times later in the day.

The optimum pollination conditions, for example for tomato cultures, can be obtained by means of the pollination programme. A better pollination also gives a greater contents of seeds and consequently rich and firm fruits of high quality and of high specific gravity. As a result an increased yield in $kg/m^2$ of cultivated area is obtained.

Claims:

1. A method of promoting pollination of flowers on plants in a greenhouse having climatic control, whereby the temperature and the atmospheric moisture are measured and regulated in dependence of the incident light, characterised in that the incident light in the greenhouse is sensed by a light sensitive device and is integrated, thereby currently providing a value (E) for accumulated energy, that is the energy received from a predetermined initial point (preferably in the early morning, e.g. sunrise) until the current moment, and in that the atmospheric moisture (LF) in the greenhouse is measured regularly and decreased by regulation concurrently with the increasing accumulated light energy (E), until the accumulated light energy has reached a first predetermined threshold value (EA), and until the atmospheric moisture has been regulated down to or below a second predetermined threshold value (LFB), and in that the atmospheric moisture content is kept below said second threshold value (LFB) for a certain period of time, during which pollination is executed, and in that after finishing the pollination the atmospheric moisture (LF) is increased considerably, until the moisture content exceeds a third predetermined threshold value (LFC) to be maintained for a certain period of time.

2. A method as claimed in claim 1, wherein the atmospheric moisture is regulated within a predetermined moisture interval defined by an upper threshold value (LF max.) and a lower threshold value (LF min.), c h a r a c t e r i s e d in that the upper threshold value (LF max.) at initiation (preferably at dawn) is set at a given initial value (LF0), whereafter the upper threshold value (LF max) is amended gradually as a diminishing function (LFX) of the accumulated light energy (E), and when/if, the accumulated light energy (E) exceeds the first predetermined threshold value (EA), the upper value (LF max.) is set at the second predetermined threshold value (LFB) during a first given period (DTB) and thereafter increased to a value (LF max-c) greater than the third predetermined threshold value (LFC), and that the lower threshold value (LF min.) from the beginning is set at a value smaller than the initial value (LF0) and during pollination to a value (LF min.-b) smaller than the second predetermined threshold value (LFB), and that the lower threshold value (LF min.) is then set at the third predetermined threshold value (LFC) and kept at this value during the second given period (DTC).

3. A method as claimed in claim 2, c h a r a c t e r i s e d in that the upper threshold value (LF max.) after initiation is calculated as a linearly diminishing function of the accumulated light energy (E), preferably with an inclination equal to the initial value (LF0) minus the second predetermined threshold value (LFA) divided by the first predetermined threshold value (EA).

4. A method as claimed in one or several of the preceding claims, characterised in that after finishing the pollination the atmospheric moisture (LF) is increased gradually with a given increase per time unit.

5. A method as claimed in one or several of the preceding claims, characterised in that after finishing the moistening period the atmospheric moisture (LF) is again decreased below a fourth predetermined threshold value (LFD, Figure 11), preferably by altering the upper threshold value (LF max.) to the fourth predetermined threshold value (LFD) and the lower threshold value (LF min.) to a corresponding lower value, and preferably the decrease is peformed gradually with a given decrement per time unit.

6. A method as claimed in one or more of the preceding claims, characterised in that the atmospheric moisture content is reduced by a limited increase of the temperature (T) and/or by a limited, stepwise opening of the windows.

7. A method as claimed in one or several of the preceding claims, characterised in that after the ideal climatic conditions are provided, including specifically the correct moisture content the pollination is initiated by activation of an alarm system warning the persons on duty, who are able to perform a manual transfer of pollen by means of a brush or the like, or alternatively by a preferably automatic generation of an air flow capable of transporting pollen.

8. A method as claimed in claim 7, c h a r a c t e r i s e d in that the air flow for transporting pollen is provided by opening and closing a number of windows in the greenhouse once or several times to a restricted opening height, said openingclosing function being repeated a given number of times at given intervals, and wherein the windows of the greenhouse are preferably of the automatically controllable type.

9. A climatic control system for use in connection with the method as claimed in one or several of the preceding claims with associated means (SL, LF, T) for providing analog or digital signals for light intensity, atmospheric moisture and temperature and comprising means (18, 19) for receiving and processing the signals as well as activation means (20) associated with means (21, 22, 23) for regulating temperature, moisture and ventilation, c h a r a c t e r i s e d in that the signal processing means (19) are adapted to provide a measure for the accumulated light energy (E) as defined in claim 1 and to regulate the atmosperic moisture (LF) as a diminishing function of the accumulated light energy, and to compare the accumulated light energy (E) with a first threshold value (EA) and to compare the atmospheric moisture (LF) measured with upper and lower variable and adjustable threshold values (LF max., LF min., LF0, LFA, LFB, LFC,

LFD, ..LF n), and further are adapted to actuate means for initiating or executing pollination.

10. A system according to claim 9, c h a r a c - t e r i s e d in that the means for initiating a pollination comprise alarm means.

Fig.1

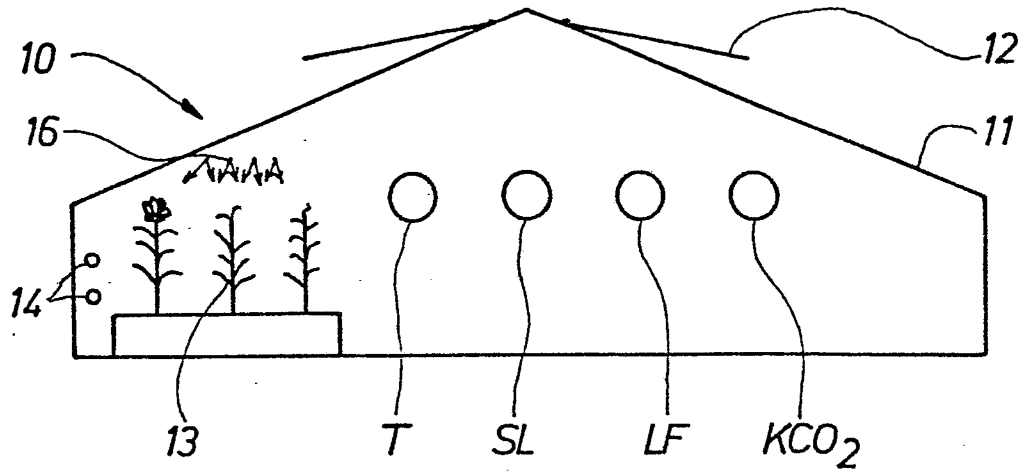
10
12
16
11
14
13
T
SL
LF
$KCO_2$

Fig.2

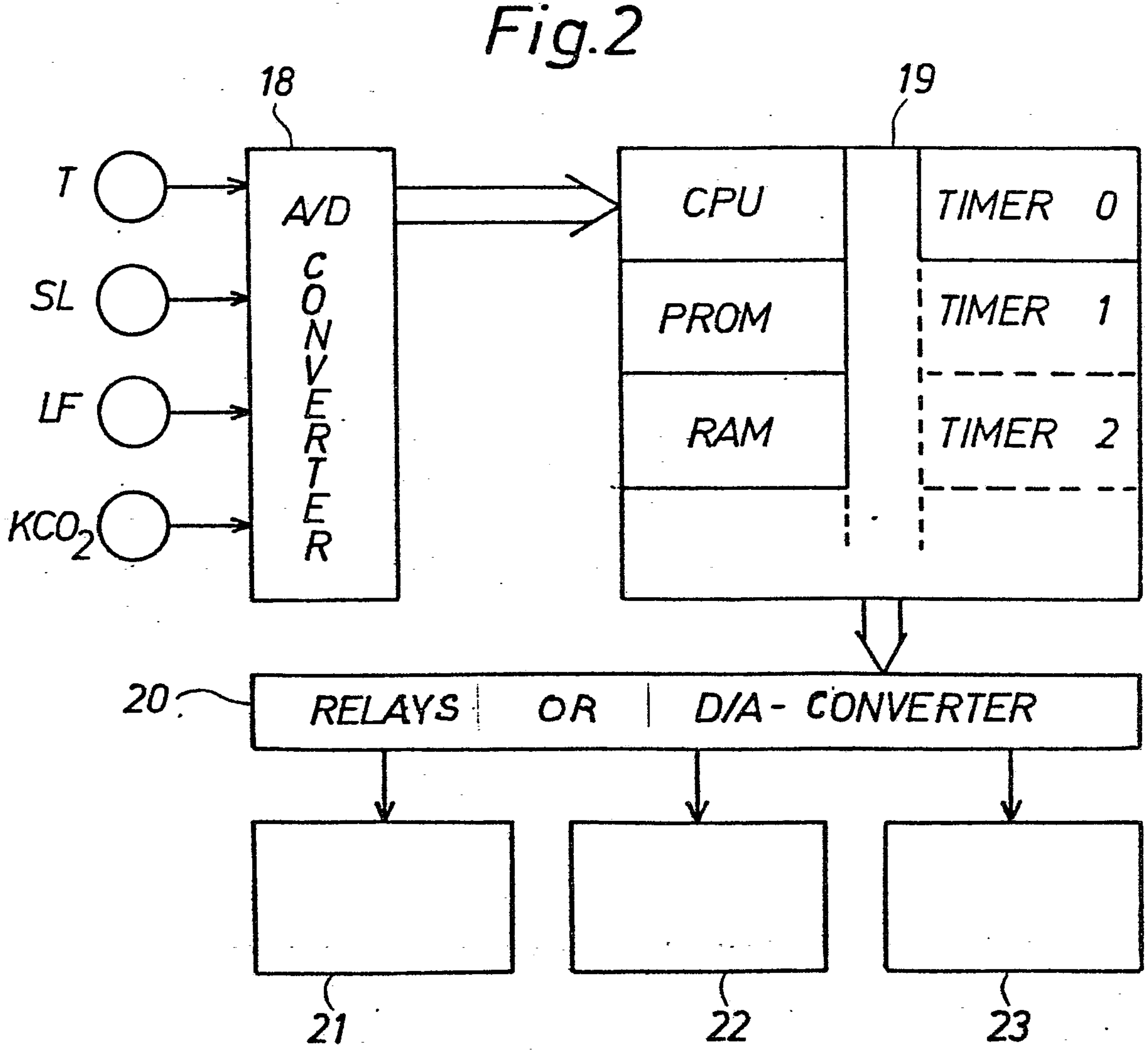
18
19
T
SL
LF
$KCO_2$
A/D CONVERTER
CPU
PROM
RAM
TIMER 0
TIMER 1
TIMER 2
20
RELAYS OR D/A- CONVERTER
21
22
23

0195373

2/7

Fig. 3

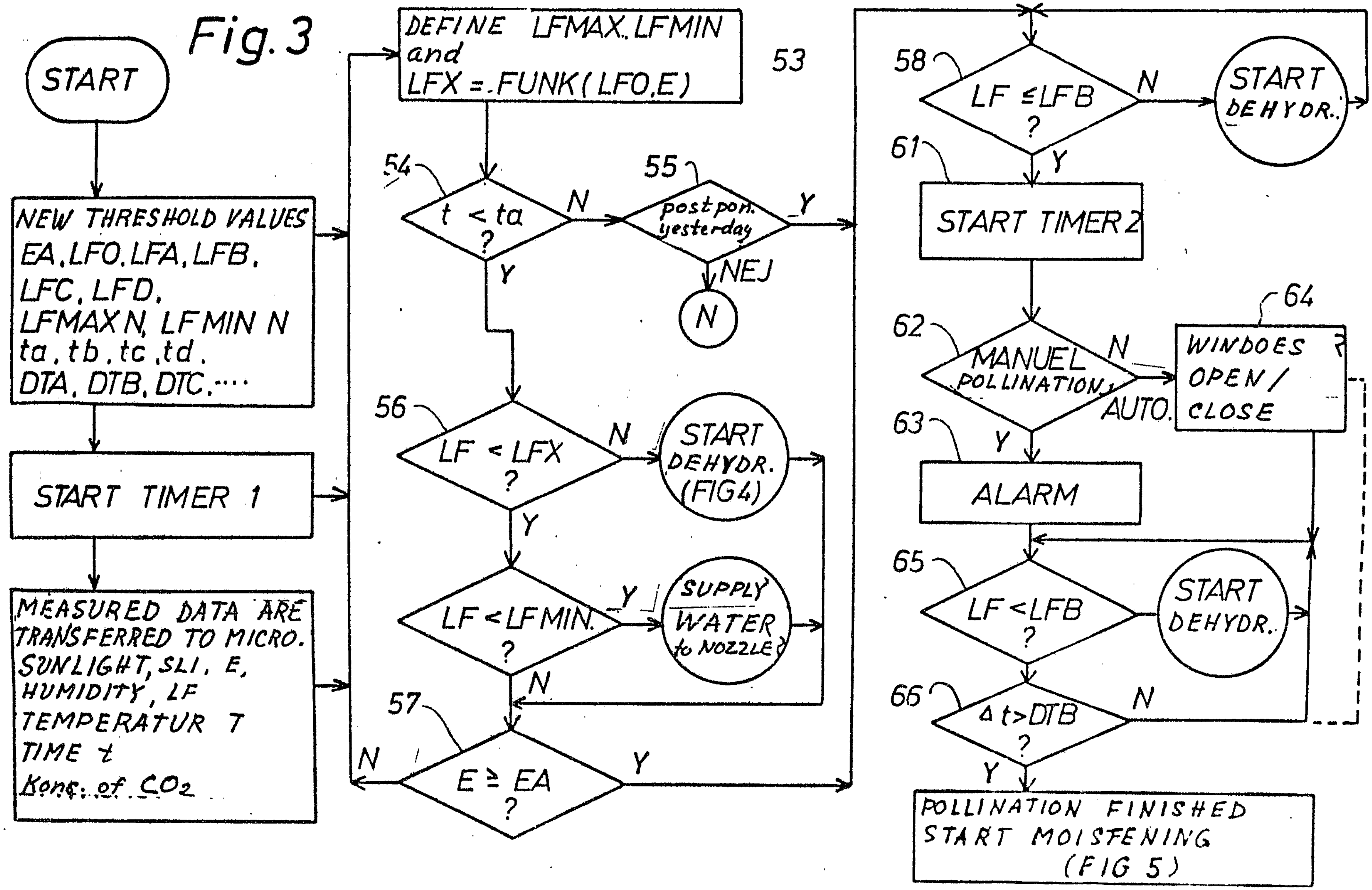

Fig.4

DEHYDRATION ROUTINE

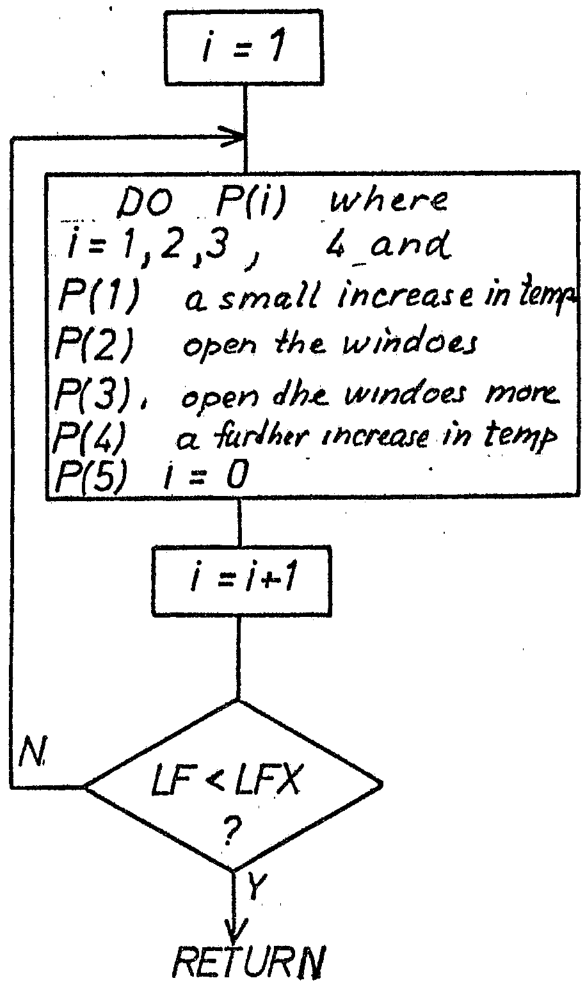


Fig.5

MOISTENING . C

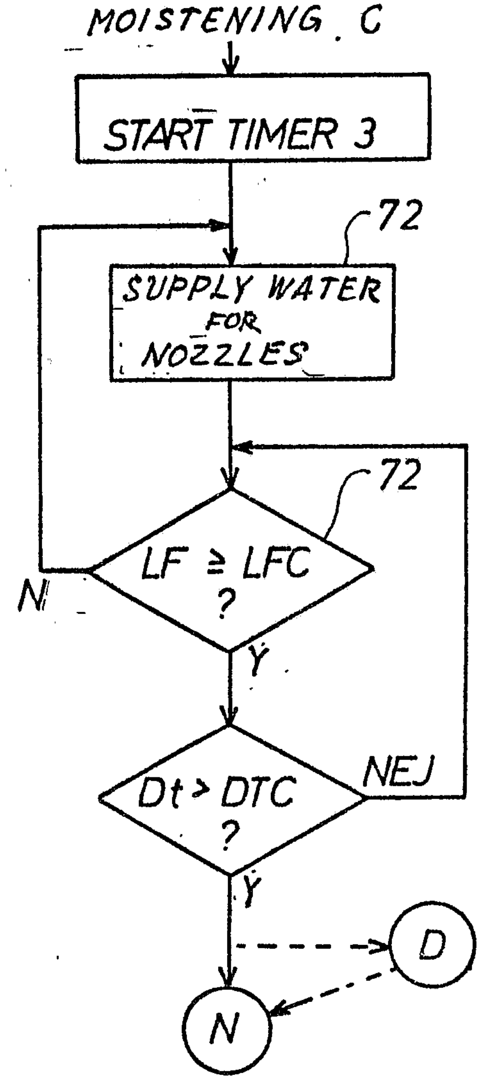

Fig. 6

CALCULATION OF LF MAX.

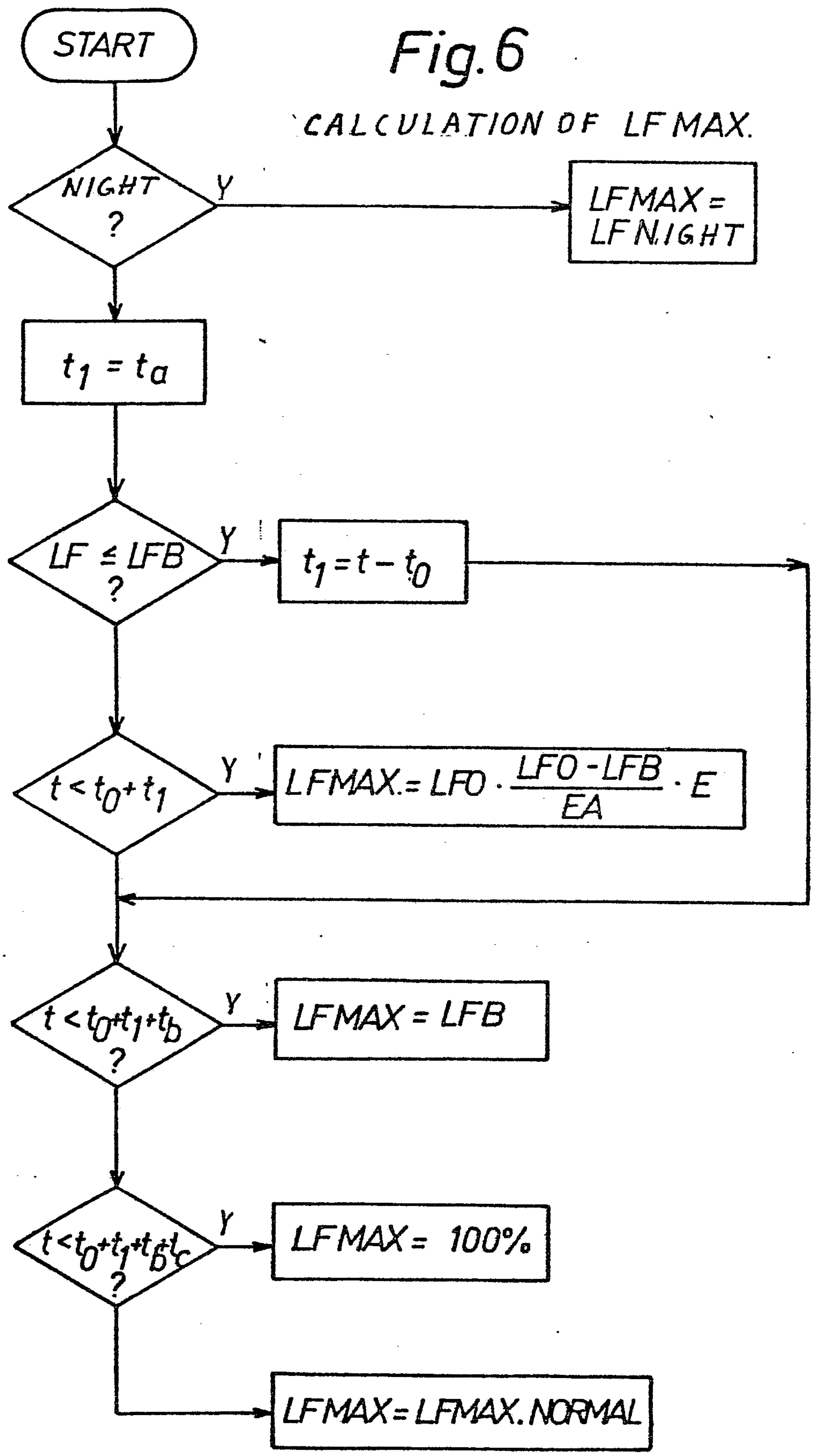

Fig.7

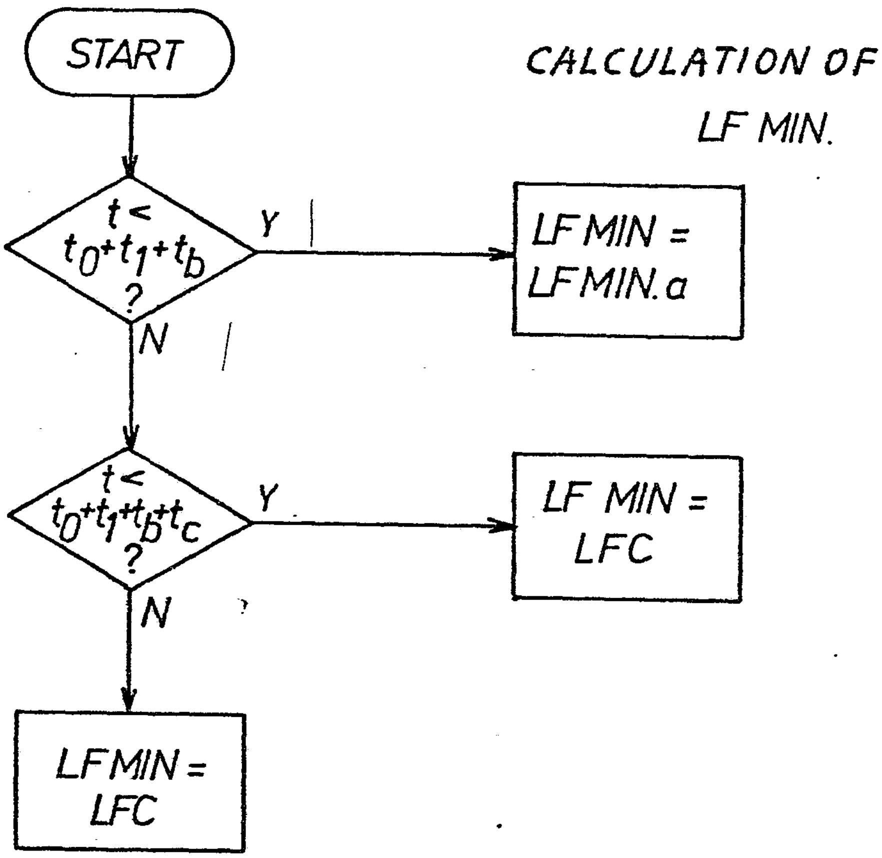
START
CALCULATION OF
LF MIN.
t <
t0+t1+tb
?
Y
N
LF MIN =
LF MIN.a
t <
t0+t1+tb+tc
?
Y
N
LF MIN =
LFC
LF MIN =
LFC

Fig. 8

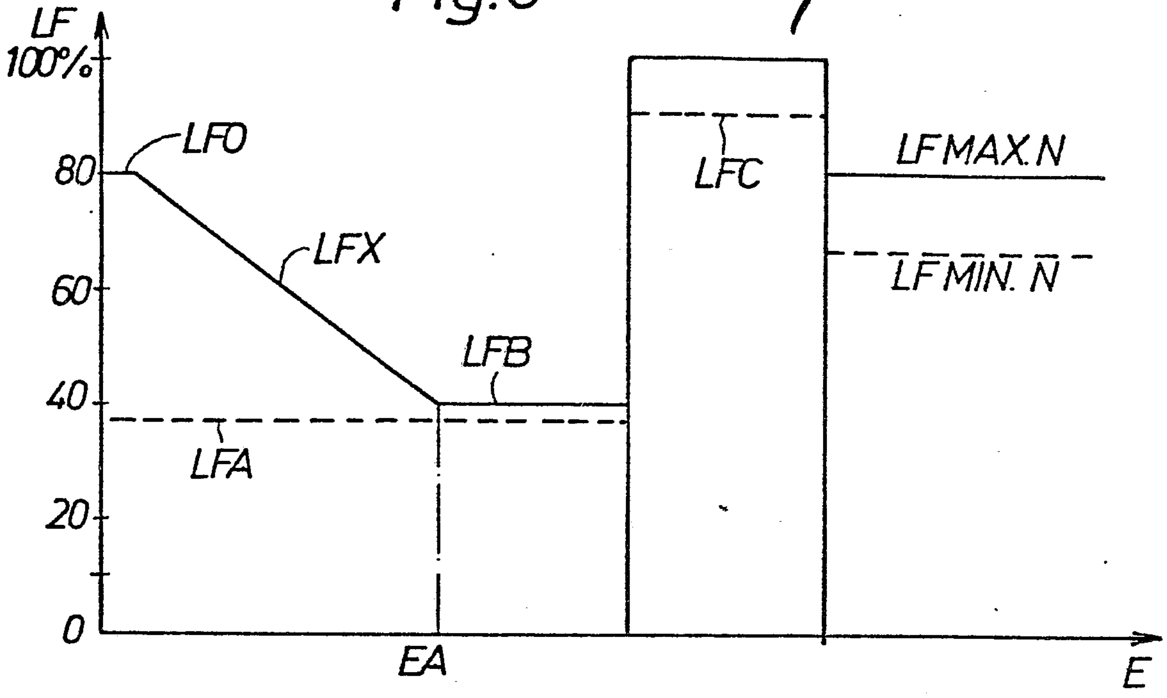
LF
100%
80
60
40
20
0
LFO
LFX
LFB
LFA
LFC
LF MAX. N
LF MIN. N
EA
E

Fig. 9

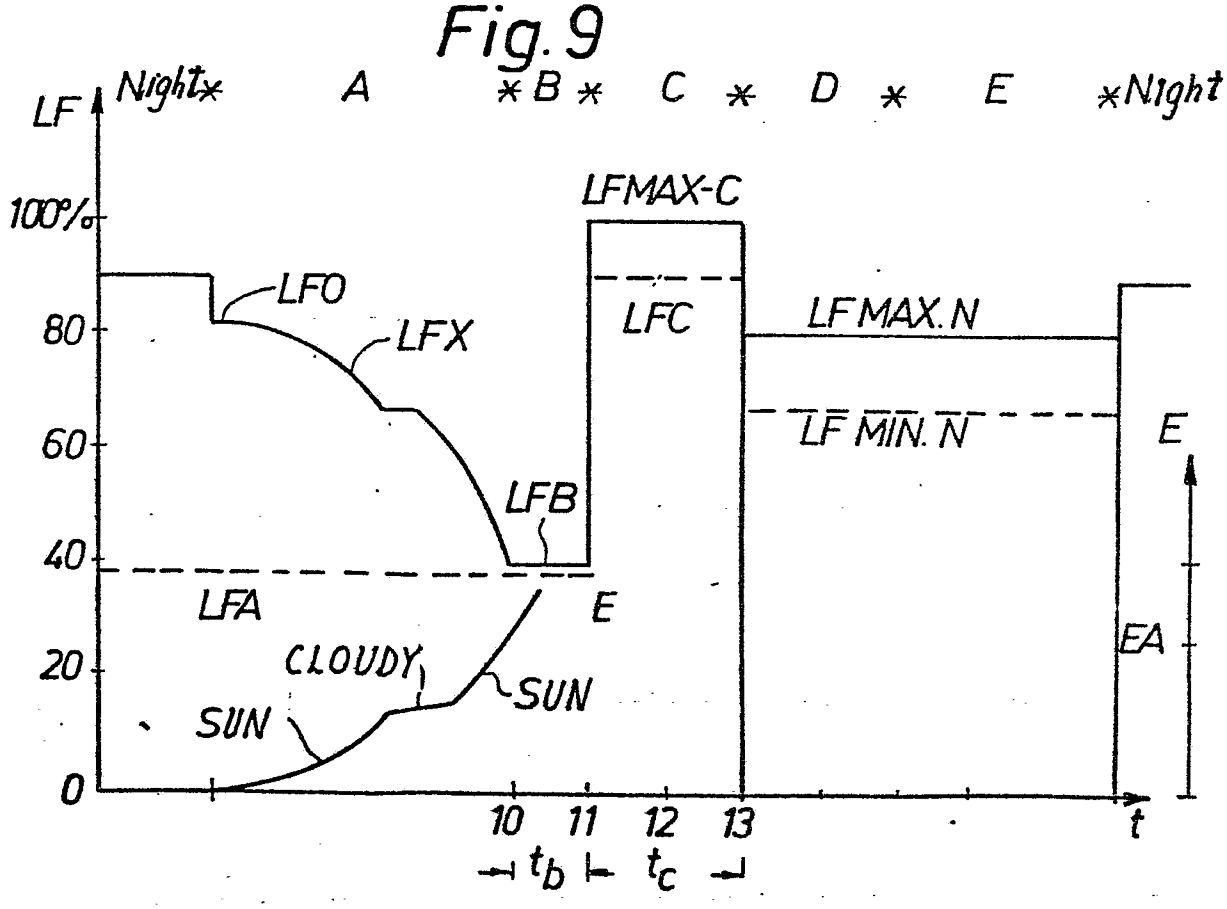
Night * A * B * C * D * E * Night
LF
100%
80
60
40
20
0
LFMAX-C
LFO
LFX
LFC
LF MAX. N
LF MIN. N
LFB
LFA
E
CLOUDY
SUN
SUN
E
EA
10
11
12
13
t
$t_b$
$t_c$

Fig.10

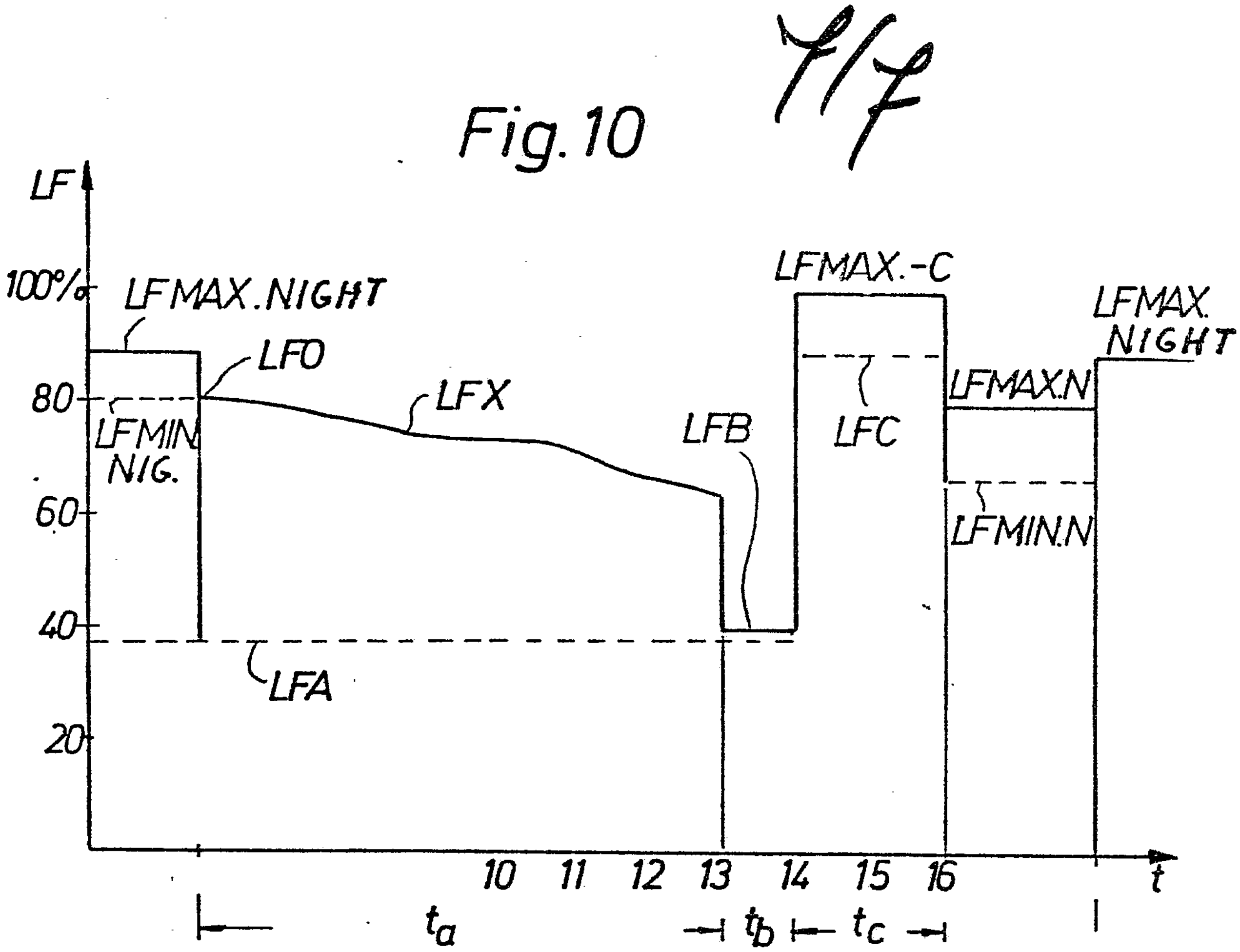
LF
100%
80
60
40
20
LFMAX.NIGHT
LFO
LFX
LFMIN NIG.
LFA
LFB
LFMAX.-C
LFC
LFMAX. NIGHT
LFMAX.N
LFMIN.N
10
11
12
13
14
15
16
t
$t_a$
$t_b$
$t_c$

Fig.11

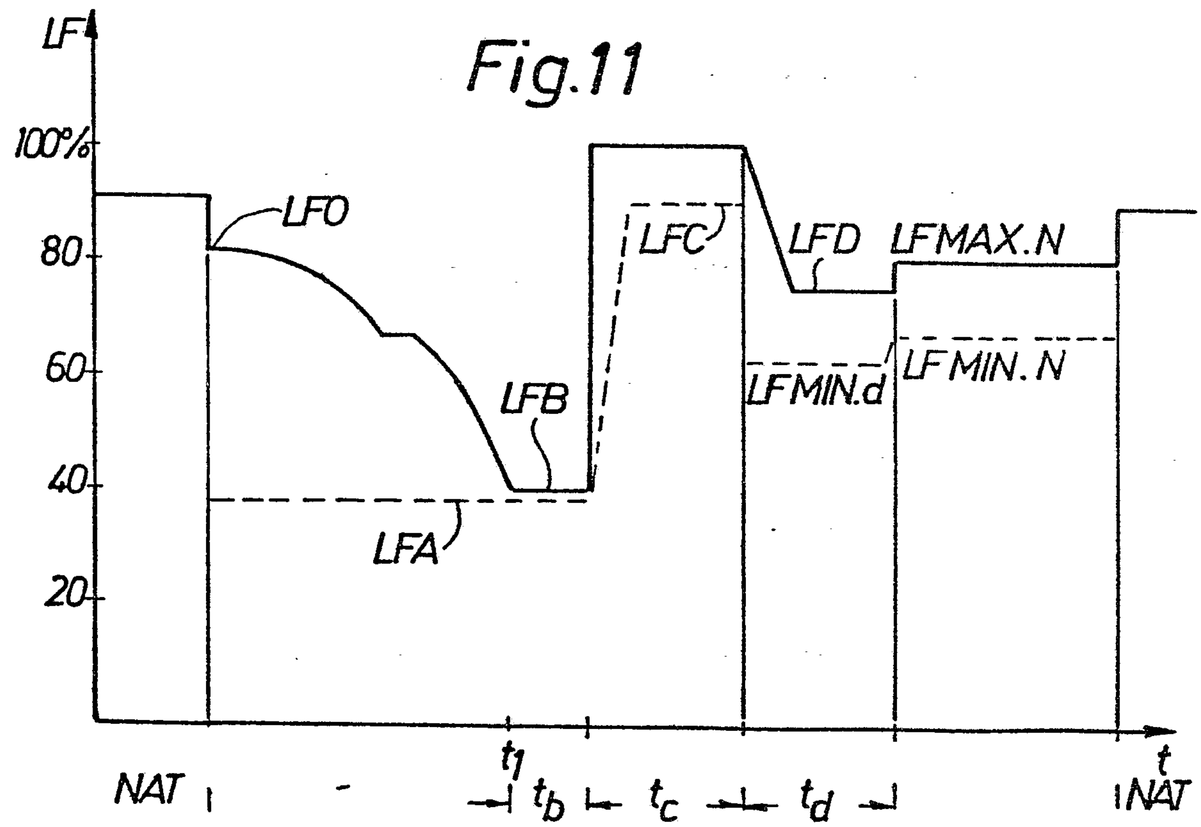
LF
100%
80
60
40
20
LFO
LFB
LFA
LFC
LFD
LFMAX.N
LFMIN.d
LFMIN. N
$t_1$
t
NAT
$t_b$
$t_c$
$t_d$
NAT